# EUROPEAN PATENT APPLICATION

(11) **EP 1 592 264 A1**
(43) Date of publication of application: **02.11.2005**
(21) Application number: 03741167.5
(22) Date of filing: 02.07.2003
(51) Int. Cl.: H04N 13/00, H04N 13/02, H04N 13/04

(54) **3-DIMENSIONAL VIDEO RECORDING/REPRODUCTION DEVICE**

(30) Priority: 03.02.2003 JP 2003025724
(71) Applicant: SHARP KABUSHIKI KAISHA, Osaka-shi, Osaka 545-8522 (JP)
(72) Inventor: NOMURA, Masayuki, Shioya-gun, Tochigi 329-1305 (JP)
(74) Representative: Suckling, Andrew Michael
(86) International application number: PCT/JP2003/008444
(87) International publication number: WO 2004/071101

(57) **Abstract**

A stereoscopic video recording and reproducing apparatus that obtains a high-quality, flicker-free stereoscopic image is provided. The stereoscopic video recording and reproducing apparatus images a subject image for left eye in one field of a video signal and images a subject image for right eye in another field of the video signal, and synchronizes the field-sequential video of these subject images. The stereoscopic video recording and reproducing apparatus converts the synchronized subject image for left eye and subject image for right eye to a time division signal within a field, and displays the time division signal using a lenticular lens or a parallax barrier method. The stereoscopic video recording and reproducing apparatus may also be configured to record the imaged video signals for left eye and right eye in a recording medium, to reproduce the recorded video signals, and to display the video signals after synchronizing and converting them to a time division signal.

## Description

### TECHNICAL FIELD

The present invention relates to a stereoscopic video recording and reproducing apparatus, and in particular to a stereoscopic television equipment for imaging a subject and recording and reproducing stereoscopic video.

### BACKGROUND OF THE INVENTION

Japanese Laid-Open Patent Publication No. H07-250351 discloses a "stereoscopic television imaging apparatus" that uses a single television imaging apparatus to alternately incorporate, in odd and even numbered fields of a memory, light beams of video for left eye and right eye and magnify the video of one field to make the sizes of the video in both fields substantially the same. In a state where the sizes are the same in both fields, the imaging apparatus corrects irregularities in the dimensions and locations of subject images for the right eye and left eye, and sets the binocular parallax to a state where the effect of stereoscopic vision is most naturally obtained. Thus, a stereoscopic television imaging apparatus which enables the optical system to be simplified and made compact can be offered.

A "stereoscopic video converter assembly" disclosed in Japanese Laid-Open Patent Publication No. H03-80696, similar to the stereoscopic television imaging apparatus disclosed in Japanese Laid-Open Patent Publication No. H07-250351, uses a single camera to shoot video for right eye and left eye in sequential fields , displays the field-sequential images as they are on a television monitor when observing the stereoscopic video, and uses spectacles for observation of dedication so that images for right eye and left eye alternately correspond to the respective eyes.

Japanese Patent Publication No. 2614845 discloses a "stereoscopic imaging apparatus" in which video for right eye and left eye are mutually phase-adjusted so that the non-interlace-scanning is performed only at their field locations. The speed of the imaging signals is doubled and the imaging signals are alternately retrieved, whereby the video for left eye and right eye are displayed at the double speed so that their relation is the relation of a field double-speed interlace. By conducting this double-speed conversion, the problem of flicker is solved.

As indicated in the above patent documents, methods of imaging in sequential fields are known as means for obtaining stereoscopic video, but there have been problems that flicker occurs at the time of observation and the image quality is poor.

The reason for this is that, ordinarily, an image is displayed at 60 fields per second, but this becomes 30 fields per second for each eye because the image is divided into images for right eye and left eye and displayed. This is detected as flicker according to the characteristics of the human eyes.

The above Japanese Patent Publication No. 2614845 solves this problem of flicker by double-speed conversion, but it is necessary to raise the precision of each part for the double speed. For this reason, there are the drawbacks that the device becomes complicated and expensive.

The object of the present invention is conceived in consideration of these circumstances, and is to easily realize a stereoscopic video recording and reproducing apparatus that obtains a high-quality, flicker-free stereoscopic image.

### DISCLOSURE OF THE INVENTION

The present invention images a subject image for left eye in one field of a video signal and images a subject image for right eye in another field of the video signal, and synchronizes the field-sequential video of these subject images.

The invention converts the synchronized subject image for left eye and subject image for right eye to a time division signal within a field, and displays the time division signal using a lenticular lens or a parallax barrier method.

The invention also images a subject image for left eye in one field of a video signal and images a subject image for right eye in another field of the video signal, and records the field-sequential video of these subject images in a recording medium.

Moreover, the invention reproduces and synchronizes the field-sequential video of the subject images for left eye and right eye recorded in the recording medium, converts the synchronized subject image for left eye and subject image for right eye to a time division signal within a field, and displays the time division signal using a lenticular lens or a parallax barrier method.

According to the above configuration, high-quality, flicker-free stereoscopic video can be obtained.

Also, because a high-speed operation such as double-speed conversion is not necessary, making the device more precise and complicated can also be avoided.

### BRIEF DESCRIPTION OF THE DRAWINGS

FIG. 1 is a configuration diagram showing main portions of an embodiment of a stereoscopic video recording and reproducing apparatus of the present invention;
FIG. 2 is a diagram for describing the operation of a synchronizing means and an image converting means; and
FIG. 3 is a diagram for describing stereoscopic vision resulting from a parallax barrier method.

### PREFERRED EMBODIMENT OF THE INVENTION

A preferred embodiment of a stereoscopic video recording and reproducing apparatus of the invention will be described below with reference to the drawings.

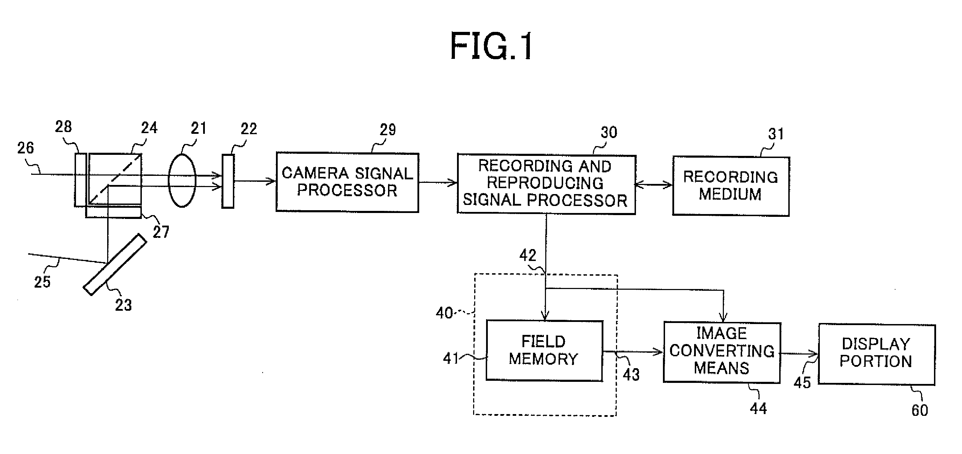

FIG. 1 is a configuration diagram showing main portions of the embodiment of the stereoscopic video recording and reproducing apparatus of the invention. In FIG. 1, 21 is an imaging lens that incorporates a light beam 26 of a subject, 22 is a solid-state imaging device, and 23 is a total reflection mirror that incorporates a light beam 25 of the subject from another direction of the light beam 26.

24 is a half prism (half mirror) that reflects the light beam 25 from the total reflection mirror 23 and causes the light beam 25 incident on the imaging lens 21. The light beam 26 in the optical axis direction of the imaging lens 21 is transmitted through the half prism 24.

27 and 28 are liquid crystal shutters that alternately open and close for each field in synchronization with the solid-state imaging device 22, and they cause the light beams 25 and 26 to be alternately incorporated in odd and even numbered fields.

29 is a camera signal processor corresponding to the solid-state imaging device 22. 30 is a recording and reproducing signal processor for recording video to a recording medium 31 or for reproducing video recorded in the recording medium 31. The recording medium here is tape, but another medium such as a disk or a memory card may also be used.

When reproducing video recorded in the recording medium 31, the video is read through the recording and reproducing signal processor 30 and supplied to a synchronizing means 40. Here, the synchronizing means 40 comprises a field memory 41, stores inputted video for each field and outputs the video for each field. As a result, one-field delay is obtained.

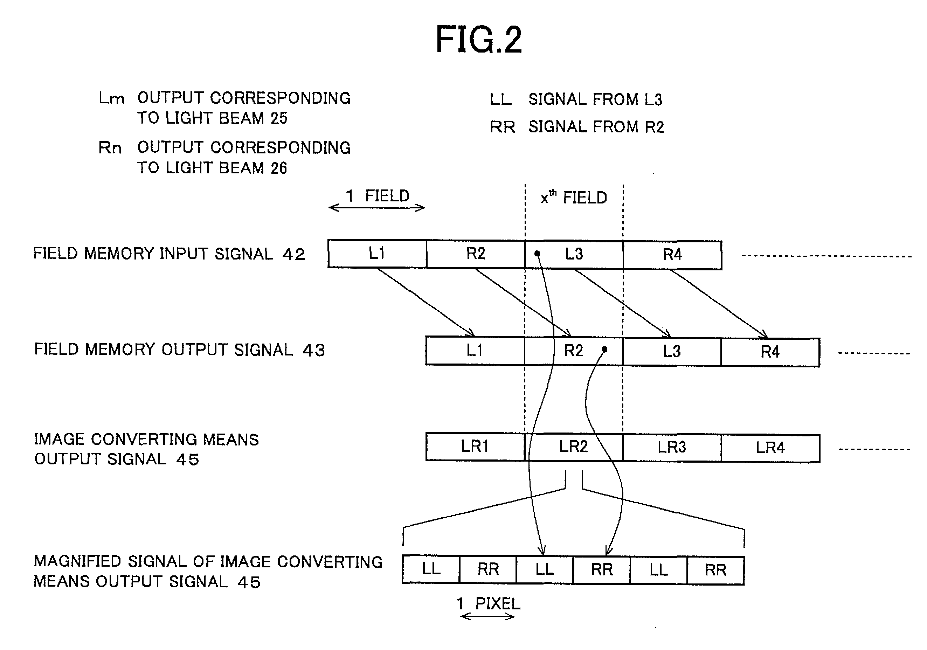

FIG. 2 is a diagram for describing the operation of the synchronizing means 40.

A field memory input signal 42 comprises alternating fields of fields Lm, which correspond to the light beam 25, and fields Rn, which correspond to the light beam 26. The field memory input signal 42 is inputted from the recording and reproducing signal processor 30.

A field memory output signal 43 from the synchronizing means 40 is a signal delayed by one field compared to the field memory input signal 42. For example, when observing the x^{th} field, the signal Lm and the signal Rm 1 are synchronized.

The synchronized field memory input signal 42 and field memory output signal 43 are converted by an image converting means 44 to match with a format necessary for a display portion 60.

The display portion 60 displays the signal Lm corresponding to the light beam 25 and the signal Rn corresponding to the light beam 26 at the same time within one field, and thereby display a stereoscopic image.

As the display portion, for example, the method using a lenticular lens disclosed in Japanese Laid-Open Patent Publication No. H03-230699 and the method using a parallax barrier disclosed in Japanese Laid-Open Patent Publication No. H10-268230 are well known, but the display portion is not limited to these and may be of another method.

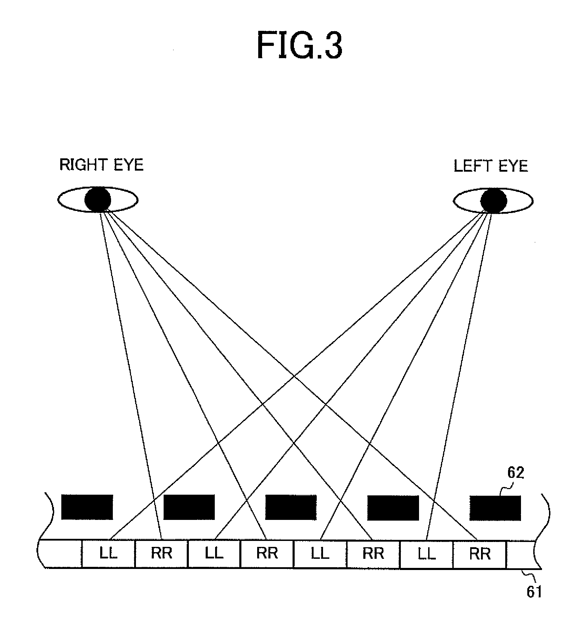

In either case, as the signal inputted to the display device, an image for left eye and an image for right eye are time-divisionally arranged for each pixel and supplied. This is shown in FIG. 3 in regard to the case of the parallax barrier.

In an image display screen 61, images for left eye LL and images for right eye RR are arranged for each pixel, and a parallax barrier 62 is disposed at front side of the screen with an appropriate distance. The images are blocked due to the presence of the parallax barrier 62 so that only the images for right eye arrive at the right eye and only the images for left eye arrive at the left eye.

Description about the case using the lenticular lens will be omitted here, but images for left eye and images for right eye are similarly arranged and supplied for each pixel.

The image converting means 44 outputs an output signal 45 in which the field memory input signal 42 and the field memory output signal 43 of the synchronizing means 40 are time-divisionally rearranged for each pixel. In the present embodiment, the signal Lm corresponding to the light beam 25 is for the left eye, and the signal Rn corresponding to the light beam 26 is for the right eye.

For example, the signal LR2 of the x^{th} field is converted using the signal L3 and the signal R2, and the signal LL from the signal L3 and the signal RR from the signal R2 are separately assigned to each pixel and alternately arranged (see FIG. 2).

In some configurations of the display device, there are also cases where the signals are separately assigned to plural pixels and arranged in a time-division manner.

According to the above configuration, as will be understood from FIG. 3, because the images for right eye and the images for left eye are displayed at 60 fields per second for each field, flicker is unnoticeable to the eyes. Thus, high-quality, flicker-free stereoscopic video is obtained.

Also, because the overall system operates at a speed of 60 fields per second and a high-speed operation such as double-speed conversion is not necessary, making the device more precise and complicated can also be avoided.

As described above, according to the present invention, a stereoscopic video recording and reproducing apparatus which can obtain high-quality, flicker-free stereoscopic video can be provided.

Also, because a high-speed operation such as double-speed conversion is not necessary, making the device more precise and complicated can also be avoided.

## Claims

1. A stereoscopic video recording and reproducing apparatus comprising:
an imaging lens that incorporates a light beam of a subject from an optical axis direction of the lens to obtain a first subject image;
light-guiding means for incorporating a light beam of a subject from a direction different from the optical axis direction of the lens and guiding the light beam of the subject to the imaging lens to obtain a second subject image;
means for imaging the first subject image in a field of a video signal and imaging the second subject image in another field of the video signal;
means for synchronizing field-sequential video of the first subject image and that of the second subject image; and
means for converting the synchronized first subject image and the synchronized second subject image to a time division signal within a field.

2. The stereoscopic video recording and reproducing apparatus of claim 1 comprising:
means for recording, in a recording medium, the field-sequential video of the first subject image and the second subject image imaged by the imaging means; and
means for reproducing the field-sequential video of the first subject image and the second subject image recorded in the recording medium;
wherein the field-sequential video of the first subject image and the second subject image obtained from the reproducing means is supplied to the synchronizing means.

3. The stereoscopic video recording and reproducing apparatus of claim 1 or 2 comprising a display portion that displays a stereoscopic image in response to the time division signal from the means for converting to a time division signal.

4. The stereoscopic video recording and reproducing apparatus of claim 3, wherein the display portion is a display portion using a lenticular lens or a display portion using a parallax barrier method.
